# EUROPÄISCHE PATENTSCHRIFT

(11) **EP 3 043 461 B1**
(45) Veröffentlichungstag und Bekanntmachung des Hinweises auf die Patenterteilung: **12.07.2017**
(21) Anmeldenummer: 16150449.3
(22) Anmeldetag: 07.01.2016
(51) Int. Cl.: H02M 1/42, H02M 3/156, H02M 7/162, H02M 3/337, B23K 9/10

(54) **VERSORGUNGSSCHALTUNG ZUR VERSORGUNG EINES SCHWEISSGERÄTES**
SUPPLY CIRCUIT FOR SUPPLYING A WELDING DEVICE
CIRCUIT D'ALIMENTATION D'UN APPAREIL DE SOUDAGE

(30) Priorität: 12.01.2015 DE 102015200249
(43) Veröffentlichungstag der Anmeldung: 13.07.2016
(73) Patentinhaber: Otto Bihler Handels-Beteiligungs-GmbH, 87642 Halblech (DE)
(72) Erfinder: MUCHE, Norbert, 87669 Rieden am Forggensee (DE)
(74) Vertreter: Tiesmeyer, Johannes

(56) Entgegenhaltungen:
- US-A1- 2007 051 712
- US-A1- 2014 021 180

## Beschreibung

Die Erfindung betrifft eine Versorgungsschaltung zur Versorgung eines Schweißgerätes mit elektrischer Energie, wobei die Versorgungsschaltung einen an eine Netzspannung anschließbaren Netzspannungsgleichrichter und einen eine Gleichspannung umwandelnden Leistungsteil umfasst, der zur Abgabe einer Spannung an einen Transformators eines Schweißgerätes anschließbar ist.

Solche Versorgungsschaltungen für Schweißgeräte sind notwendig, da die Netzspannung normalerweise eine sinusförmige Wechselspannung mit einer bestimmten Frequenz ist, während Schweißgeräte häufig eine rechteckförmige Wechselspannung mit einer anderen Frequenz zum Betrieb benötigen. Deshalb ist die Umwandlung der sinusförmigen Netzspannung in eine Gleichspannung, die dann wiederum in eine geeignete rechteckförmige Wechselspannung umgewandelt wird, erforderlich.

Bei der bekannten Versorgungsschaltung für Schweißgeräte ist üblicherwei - se ein Drehstrombrückengleichrichter bzw. eine B6-Schaltung vorgesehen, der bzw. die an die Netzspannung anschließbar ist und diese in eine Gleichspannung umwandeln kann. Die Spannungshöhe dieser Gleichspannung ist der Spitzenwert der verketteten Netzspannung, womit sich Schwankungen der Netzspannung direkt auf die Gleichspannung auswirken. Die Gleichspannung wird in einen mit dem Drehstrombrückengleichrichter elektrisch gekoppelten Zwischenkreis eingespeist, damit sie von diesem für das räumlich möglicherweise entfernt liegende Leistungsteil bereitgestellt werden kann. Im Zwischenkreis kann zwischen den beiden Polen ein Kondensator zur Glättung vorgesehen sein.

Das Leistungsteil wandelt diese bereitgestellte Gleichspannung in beispiels - weise eine rechteckförmige Wechselspannung mit der gewünschten Frequenz um und kann mit dem Transformator eines Schweißgerätes verbunden werden, um diesem die für den Betrieb des Schweißgerätes benötigte Spannung bereitzustellen. Dabei wird das Leistungsteil mit einem bestimmten Tastverhältnis oder Ansteuerverhältnis angesteuert, wodurch sich beispielsweise die Einschaltzeit der einzelnen Schalter und damit die Halbwel - lendauer einstellen lässt, womit sich auch die Effektivspannung der an den Transformator des Schweißgerätes abgegebenen Spannung einstellen lässt. Das Leistungsteil ist üblicherweise als H-Brücke ausgeführt.

Bei dieser Schaltungsanordnung ist die für das Leistungsteil bereitgestellte Gleichspannung nicht aktiv beeinflussbar und verändert sich damit in Ab - hängigkeit des Netzspannungseffektivwertes und der Netzspannungsform. Da immer auf den Spitzenwert der Netzspannung gleichgerichtet wird und der Spitzenwert vor allem durch Oberwellen beeinflusst wird, haben Netzspannungsschwankungen erhebliche Einflüsse auf den erzeugten Schweißstrom, was durch Messungen der Netzspannung oder des Zwischenkreisspannungswertes und entsprechende Gegensteuermaßnahmen kompensiert wird. Die Kompensation wird dann durch eine entsprechende Anpassung des Tastverhältnisses erzielt, mit dem das Leistungsteil angesteuert wird. Damit richtet sich die Geschwindigkeit, mit der Spannungsschwankungen des Netzes kompensiert werden, nach der üblichen Taktung bzw. dem üblichen Tastverhältnis, mit dem das Leistungsteil angesteuert wird. Denn eine Kompensation kann immer erst dann erfolgen, wenn der aktuelle Takt beendet ist. Die Frequenz der üblichen Taktung des Leistungsteils liegt zwischen 1 kHz und 5 kHz.

Damit ergibt sich insbesondere der Nachteil bei dieser Schaltungsanordnung, dass bei pulsartiger Netzbelastung (z.B. durch weitere Schweißanlagen, die hinzugeschaltet werden) die für die Kompensation notwendige Messung kurz vor der entsprechenden Netzbelastung ausgeführt werden könnte. Damit würde ggf. ein falscher Kompensationswert ermittelt, denn die zusätzliche Netzbelastung könnte gerade in dem Zeitfenster nach dieser Messung eintreten, in dem nicht gemessen wird bzw. bei dem die entsprechende Messung erst später in eine entsprechende Kompensation einfließen kann. Dies führt dazu, dass der Schweißstrom reduziert wird, da die versorgende Spannung reduziert ist.

Dies kann zwar teilweise durch eine häufigere Messung auch während des Schweißvorgangs und Anpassung der Taktung des Leistungsteils entsprechend der gemessenen Spannung reduziert werden, dies ist jedoch durch die Induktivität des Transformators des Schweißgeräts sowie durch die von diesem benötigte Frequenz der vom Leistungsteil abgegebenen Spannung begrenzt. Insbesondere lässt sich die Taktung bzw. das Tastverhältnis des Leistungsteils nicht einfach erhöhen, denn diese Taktung ist durch das Schweißgerät und der von diesem benötigten Frequenz der Spannung vorgegeben. Damit ergibt sich hierdurch immer mindestens eine Halbwelle Verzugszeit bevor die Kompensation an eine entsprechende Spannungsschwankung angepasst ist. Damit ist keine vollständige Kompensation möglich, insbesondere von kurzfristigen Spannungsschwankungen.

Ferner erfordert der Betrieb eines Schweißgerätes häufig große Ströme, sog. Schweißstromspitzen. Eine solche Schweißstromspitze kann dazu führen, dass dem Zwischenkreis entsprechend viel Strom entnommen wird, wodurch die Zwischenkreisspannung abfällt, wodurch dann der Spitzenstrombedarf direkt aus dem Netz entnommen wird. Dies kann eine erhebliche Belastung des Netzes bedeuten, denn die benötigten Ströme von Schweißgeräten, insbesondere von mehreren Schweißgeräten, können bei einer solchen ungepufferten Entnahme des Stroms direkt aus dem Netz die Stabilität des Netzes direkt beeinflussen, insbesondere wenn es ein Netz mit keiner großen Leistung ist.

Das Dokument US 2007/0051712 A1 veröffentlicht eine Versorgungsschaltung zur Versorgung eines Schweißgerätes mit elektrischer Energie nach dem Oberbegriff des Anspruchs 1. Der Erfindung liegt somit die Aufgabe zugrunde, eine Versorgungsschaltung zur Versorgung eines Schweißgerätes mit elektrischer Energie bereitzustellen, die eine größere Unabhängigkeit von Netzspannungseinbrüchen und Netzspannungsschwankungen ermöglicht, während gleichzeitig das Netz weniger belastet wird und auch ein Netz mit geringerer Anschlussleistung in begrenztem Maße für Schweißgeräte nutzbar ist.

Zur Lösung dieser Aufgabe wird eine Versorgungsschaltung mit den Merkmalen des Anspruchs 1 vorgeschlagen. Vorteilhafte Ausgestaltungen sind Gegenstand der abhängigen Ansprüche.

In der erfindungsgemäßen Versorgungsschaltung kann für das Leistungsteil eine Gleichspannung erzeugt werden, die höher als die Spitzenspannung der Netzspannung ist. Diese ist, da sie durch den Gleichspannungswandler aus der von dem Netzspannungsgleichrichter bereitgestellten Gleichspan - nung erzeugt wird, weniger abhängig von der Netzspannung und insbesondere kann die Ansteuerung des Gleichspannungswandlers dafür verwendet werden, Schwankungen der Netzspannung auszugleichen. Damit muss der Ausgleich nicht mehr im Leistungsteil erfolgen, womit der Ausgleich in flexiblerer Weise erfolgen kann, denn während das Tastverhältnis des Leistungsteils durch die Anforderung des Transformators des Schweißgerätes vorgegeben ist, ist ein Tastverhältnis des Gleichspannungswandlers durch das gewünschte Übersetzungsverhältnis und die Bauteile des Gleichspan - nungswandlers bestimmt. Beides ist in gewissem Maße wählbar und kann deshalb optimiert für die Kompensation der Netzspannungsschwankungen ausgelegt werden.

Bevorzugt wird als Gleichspannungswandler ein Hochsetzwandler bzw. Hochsetzsteller verwendet. Denn ein solcher ist technisch relativ einfach aufgebaut und genügt als Gleichspannungswandler, denn in den meisten Fällen benötigt der Transformator eines Schweißgerätes erheblich höhere Spannungen als sie in üblichen Netzen herrschen. Denn wenn der Transformator des Schweißgerätes eine hohe Spannung in eine niedrige Spannung transformiert, wird entsprechend proportional die Stromstärke erhöht, denn die Leistung als Produkt von Spannung und Stromstärke muss beiderseits des Transformators nahezu gleich sein. Dementsprechend begünstigt das Erhöhen der Spannung durch den Hochsetzwandler das Bereitstellen einer großen Stromstärke für den Schweißstrom, da das Übersetzungsverhältnis Eingangsspannung zu Ausgangsspannung des Transformators größer sein kann.

Vorzugsweise ist der Gleichspannungswandler darauf ausgelegt, mit einer Taktfrequenz größer als die Taktfrequenz eines an einen Spannungsausgang des Leistungsteils angeschlossenen Transformators eines Schweißgerätes betrieben zu werden. Wie oben ausgeführt, begrenzt bei der Schaltung im Stand der Technik die vom Transformator des Schweißgerätes benötigte Frequenz die Geschwindigkeit mit der eine Kompensation erfolgen kann, da mindestens eine Halbwelle Verzugszeit vorhanden ist. Eine entsprechende Verzugszeit ergibt sich auch beim Kompensation durch den Gleichspannungswandler, weshalb es vorteilhaft ist, diesen mit einer erheblich höheren Taktfrequenz zu betreiben. Dadurch verkürzt sich die Dauer eines Taktes und damit die Dauer einer Halbwelle, womit die Kompensation schneller erfolgen kann. Eine solche höhere Taktfrequenz zur Ansteuerung des Gleichspannungswandlers lässt sich bei einem bekannten gewünschten Übersetzungsverhältnis durch geeignete Auswahl des Gleichspannungswandlers und der Parameter seiner Komponenten ermöglichen. Dies gilt insbesondere für den Hochsetzwandler. Gemäß Anspruch 1 ist zwischen dem Gleichspannungswandler und dem Leistungsteil ein Zwischenkreis mit mindestens einem Kondensator, der zwischen den beiden Spannungsniveaus des Zwischenkreises angeordnet ist, geschaltet. Dabei wird ferner der Gleichspannungswandler darauf ausgelegt, bei Leistungsentnahme eines Schweißgerätes aus dem Leistungteil die für den Zwischenkreis bereitgestellte Spannung unter eine aktuelle Span - nung des mindestens einen Kondensators zu verringern. Damit fließt elektri - sche Ladung aus dem Kondensator ab, womit zumindest bei kurzzeitigen Schweißvorgängen der Spitzenstrombedarf in erheblichem Umfang aus dem Kondensator anstatt aus dem Netz gedeckt wird, wodurch die Netzbelastung verringert ist. Dabei ist bevorzugt der Kondensator mit einer größeren Kapa - zität als für Zwischenkreiskondensatoren im Stand der Technik üblich auszulegen, denn der Kondensator im Zwischenkreis bei vorliegender Erfindung dient nicht nur der Glättung der Spannung, sondern dient vielmehr auch als eine Art Energie- bzw. Stromspeicher, womit er entsprechend auszulegen ist.

Bevorzugt umfasst der Netzspannungsgleichrichter einen Drehstrombrückengleichrichter und/oder eine B6-Schaltung. Diese sind für die vorliegende Erfindung besonders geeignet, um die Netzspannung in eine Gleichspannung für den Hochsetzwandler umzuwandeln.

Bevorzugt ist das Leistungsteil als eine H-Brücke ausgelegt. Eine solche H-Brücke ist als Leistungsteil für die vorliegende Erfindung besonders geeignet, da bei vorliegender Erfindung das Leistungsteil keine oder nur eine erheblich geringere Kompensationsfunktion erfüllen muss. Stattdessen muss das Leistungsteil vor allem die richtige nicht-konstante Spannung für den Transformator des Schweißgerätes bereitstellen und dafür ist eine H-Brücke besonders geeignet.

Der Gleichspannungswandler umfasst vorzugsweise mindestens eine Induktivität, mindestens einen Kondensator, mindestens eine Diode und mindestens einen Hochfrequenzschalter, der bevorzugt mindestens einen mit einer Taktung ansteuerbaren Transistor umfasst. Mit diesen Bauteilen lässt sich der Gleichspannungswandler insbesondere in Form eines Hochsetzwandlers ausführen. Gleichzeitig erlauben diese Komponenten durch geeignete Wahl ihrer Eigenschaften den Gleichspannungswandler so auszulegen, dass er insbesondere mit einer Taktung größer als die üblichen Taktungen des Leistungsteils ansteuerbar ist, wodurch eine schnellere Kompensation von Spannungsschwankungen wie oben beschrieben ermöglicht wird. Ferner verringert die Induktivität den Einfluss von Spannungsänderungen der Netzspannung, denn die Induktivität reagiert aufgrund der Induktion verzögert auf die Spannungsänderungen des Netzes, womit die für den Zwischenkreis bereitgestellte Spannung ebenfalls sich erst mir Verzögerung ändert. Dabei fungiert die Induktivität als eine Art Stromspeicher.

Bevorzugt umfasst der Zwischenkreis zwei oder mehr in Reihe geschaltete Kondensatoren. Durch diese Verwendung von mehreren Kondensatoren kann der einzelne Kondensator kleiner dimensioniert werden und trotzdem eine hohe Kapazität erzielt werden, wodurch die Stromaufnahmezeit aus den Kondensatoren des Zwischenkreises bei einer Kurzzeitschweißung erhöht werden kann, insbesondere um den Faktor 2 gegenüber bekannten Schaltungen, was zu einer ebenso hohen Reduzierung des Spitzenstrombedarfs führt, wodurch das Netz erheblich weniger belastet wird.

Erfindungsgemäß ist auch vorgesehen, eine entsprechende Versorgungsschaltung nicht nur separat von einem Schweißgerät bereitzustellen, sondern ein Schweißgerät bereitzustellen, das unmittelbar eine solche Versorgungsschaltung umfasst.

In einer Ausführungsform ist ebenfalls vorgesehen, dass eine Versorgungsschaltung zur Versorgung mehrerer Schweißgeräte dient, womit entsprechend mehrere Leistungsteile, evtl. mehrere Zwischenkreise mit entsprechenden Kondensatoren, evtl. mehrere Gleichspannungswandler und evtl. mehrere Netzspannungsgleichrichter vorzusehen sind.

Unter Bezugnahme auf die Figuren wird nachstehend ein Ausführungsbeispiel der Erfindung mit einer bestimmten Merkmalskombination dargestellt. Darüber hinaus ist aber auch jedes offenbarte Merkmal in Verbindung mit Anspruch 1 Teil der vorliegenden Erfindung. Ferner ist auch jede Kombination der offenbarten Merkmale in Verbindung mit Anspruch 1 Teil der vorliegenden Erfindung.

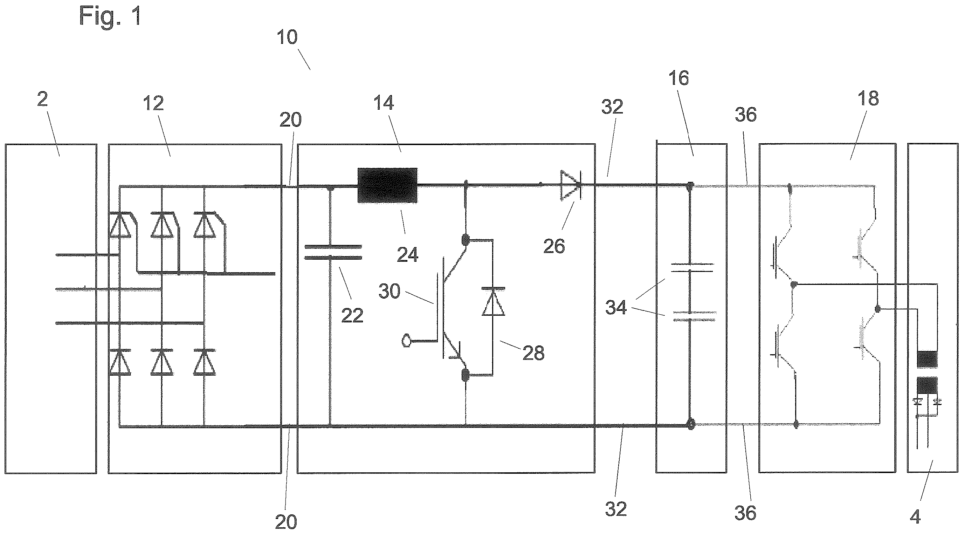

- Figur 1: zeigt ein Schaltbild einer erfindungsgemäßen Versorgungsschaltung, die mit einem Netz und einem Transformators eines Schweißgerätes verbunden ist.

Wie in Figur 1 gezeigt, umfasst die erfindungsgemäße Versorgungsschaltung zur Versorgung eines Schweißgerätes mit elektrischer Energie 10 einen als Drehstrombrückengleichrichter ausgeführten Netzspannungsgleichrichter 12, einen elektrisch daran gekoppelten und als Hochsetzwandler ausgeführten Gleichspannungswandler 14, einen elektrisch daran gekoppelten Zwischenkreis 16 und ein elektrisch daran gekoppeltes und als H-Brücke ausgeführtes Leistungsteil 18. In dem in Figur 1 gezeigten Zustand ist die erfindungsgemäße Versorgungsschaltung 10 bereits mit einem Netz 2 und einem Schweißgerät 4 verbunden.

Dabei müssen die einzelnen Bauteile nicht wie in Figur 1 angedeutet jeweils in separaten Gehäusen vorgesehen sein, es können auch mehrere oder alle Bauteile in einem Gehäuse vorgesehen sein und es kann die erfindungsgemäße Versorgungsschaltung 10 auch in dem Gehäuse des zu versorgenden Schweißgerätes 4 vorgesehen werden.

Der Netzspannungsgleichrichter ist hier als Drehstrombrückengleichrichter ausgeführt, der in technisch bekannter Weise aus sechs Dioden und einer entsprechenden Ansteuerung aufgebaut ist und der in entsprechend bekannter Weise an das Netz angeschlossen ist, um eine Wechselspannung des Netzes in eine Gleichspannung umzuwandeln. Durch entsprechende elektrische Leitungen 20 ist der Gleichspannungsausgang des Drehstrombrückengleichrichters an einen Spannungseingang des Gleichspannungs - wandlers 14 angeschlossen.

Der Gleichspannungswandler 14 ist hier als Hochsetzwandler 14 ausgeführt und umfasst einen Kondensator 22, eine Induktivität 24, eine Diode 26 und einen Hochfrequenzschalter 28, der einen mit einer Taktung ansteuerbaren Transistor 30 umfasst. Durch geeignete Dimensionierung und Auslegung dieser Komponenten kann eine hohe Taktung bzw. ein hohes Tastverhältnis des Transistors unter gleichzeitiger Einhaltung der Erfordernisse hinsichtlich des Übersetzungsverhältnisses erzielt werden. Damit können nach Messung der Gleichspannung der Leitungen 20 bzw. der Wechselspannung des Netzes 2 Schwankungen der Netzspannung schnell kompensiert werden. Die hierfür erforderlichen Messgeräte sind nicht gezeigt, können aber in einer erfindungsgemäßen Versorgungsschaltung 10 ebenfalls integriert sein. Der Gleichspannungswandler 14 ist an seinem Ausgang mit entsprechenden Leitungen 32 an den Zwischenkreis 16 elektrisch gekoppelt.

Der Zwischenkreis 16 umfasst zwei zwischen seinen Polen elektrisch in Reihe gekoppelte Kondensatoren 34. Diese Kondensatoren 34 sind bevorzugt mit einer hohen Kapazität ausgelegt, da sie wie im Folgenden noch beschrieben, als Energie- bzw. Stromspeicher für den Betrieb des Schweißgerätes dienen sollen. An den Ausgang des Zwischenkreises 16 ist über entsprechende Leitungen 36 der Eingang des Leistungsteils 18 elektrisch gekoppelt.

Das Leistungsteil 18 ist hier als H-Brücke ausgeführt, die mehrere entsprechende elektrische Schalter umfasst, die zur Umwandlung der am Eingang des Leistungsteils 18 bereitgestellten Gleichspannung in eine am Ausgang des Leistungsteils 18 bereitgestellte rechteckförmige Wechselspannung dienen. Das Leistungsteil kann dabei insbesondere in jeder im Stand der Technik bekannten Form ausgeführt werden, die eine entsprechende Umwandlung einer Gleichspannung in eine entsprechend gewünschte Spannung ermöglicht. Hierbei ist entscheidend, dass die Taktung des Leistungsteils 18 nicht mehr hoch sein muss, denn bei vorliegender Erfindung erfolgt die Kompensation, deren Geschwindigkeit sich nach der Taktung richtet, durch den Gleichspannungswandler 14, womit dessen Taktung für die Kompensation maßgeblich ist. Die Auslegung des Leistungsteils und insbesondere seiner Bauteile kann sich also bei vorliegender Erfindung rein danach richten, dass möglichst präzise die vom Transformator des Schweißgerätes benötigte Spannung erzeugt wird.

Die erfindungsgemäße Versorgungsschaltung kann insbesondere für die im folgenden beschriebene Betriebsweise ausgelegt sein. Die Netzspannung kann beispielsweise eine sinusförmige Netzspannung von 400 Volt sein. Der Netzspannungsgleichrichter 12 erzeugt daraus eine Gleichspannung, die dem Spitzenwert der verketteten Netzspannung entspricht, also bei sinusförmiger Spannung dem 1,41-fachen Wert von 400 Volt, also 564 Volt. Diese Spannung dient als Eingangsspannung des Gleichspannungswandlers 14. Durch geeignete Ausführung wird dieser als Hochsetzwandler betrieben und kann mit einer Taktung von 11 kHz diese Gleichspannung von 564 Volt auf eine für den Zwischenkreis bereitgestellte Spannung von 700 Volt wandeln. Diese Spannung lädt die Kondensatoren 34 in einer Anschalt- bzw. "Aufwärm"-Phase, so dass sie bei Wegfall der Spannung selbst die 700 Volt-Spannung bereitstellen würden, zumindest für einen kurzen Zeitraum. Die im Vergleich zu üblichen Leistungsteilen mit 1 kHz bis 5 kHz-Taktung besonders hohe Taktung von 11 kHz des Gleichspannungswandlers 14 erlaubt eine schnelle Kompensation entsprechender Netzschwankungen, da die Mindestverzugszeit von einer Halbwelle aufgrund der viel höheren Taktung verringert ist.

Um die Spitzenstromaufnahme zu reduzieren, wird während des Schweißvorgangs die vom Gleichspannungswandler 14 für den Zwischenkreis 16 bereitgestellte Gleichspannung in einer Rampe bzw. Rampenform, also mit der Zeit gleichmäßig, von 700 Volt auf 630 Volt reduziert. Damit fließen entsprechend Ladungen aus den Kondensatoren im Zwischenkreis ab, denn die Kondensatoren sind auf 700 Volt geladen, und es wird nach Umwandlung der Spannung durch das Leistungsteil 18 Energie und/oder Strom aus den Kondensatoren 34 für den Betrieb des Schweißgerätes 4 bereitgestellt. Dadurch wird die Spitzenstromaufnahme aus dem Versorgungsnetz bzw. aus der Netzspannung 2 reduziert. Nach Ende des Schweißvorgangs wird die vom Gleichspannungswandler 14 für den Zwischenkreis 16 bereitgestellte Gleichspannung dann wieder in einer Rampe auf 700 Volt erhöht. Diese rampenförmige bzw. mit der Zeit gleichmäßige Erhöhung bzw. Erniedrigung der Spannung ist aufgrund der vorhandenen Induktivitäten in der Versorgungschaltung 10 vorteilhaft.

Die hierbei genannten Spannungen und Taktungen sind rein beispielhaft. Beispielsweise könnten die Kondensatoren 34 auch größer ausgelegt werden, woraufhin während des Schweißvorgangs eine noch mehr reduzierte Spannung von dem Gleichspannungswandler 14 bereitgestellt würde, wodurch noch mehr Energie aus den Kondensatoren 34 für das Schweißgerät 4 bereitgestellt würde, wodurch die Netzbelastung noch weiter verringert würde. Entsprechend wäre aber die Größe bzw. Kapazitäten der Kondensatoren 34 anzupassen.

Nachdem aus den Kondensatoren 34 Energie für einen Schweißvorgang bereitgestellt wurde, muss entsprechend der Anschaltphase eine erneute Phase des Aufladens der Kondensatoren erfolgen. Durch diese Betriebsweise, für die die Versorgungsschaltung bevorzugt ausgelegt ist, kann die Strom - aufnahmezeit einer Kurzzeitschweißung um den Faktor 2 erhöht werden, was zu einer ebenso hohen Reduzierung des Spitzenstrombedarfs und der Spitzenleistung führt. Damit ist die vorliegende erfindungsgemäße Versorgungsschaltung insbesondere vorteilhaft, wenn mehrere Schweißgeräte 4 an eine Netzspannung 2 angeschlossen werden sollen.

Denn anders als bei den bisher im Stand der Technik bekannten Lösungen, würde der jeweilige Betrieb der Schweißgeräte 4 nicht sofort zu einer entsprechenden Belastung der Netzspannung 2 führen, was im Stand der Technik dazu führt, dass der Betrieb entsprechend der Schweißgeräte 4 teilweise aufeinander abgestimmt werden muss, sondern Leistungs- und Stromaufnahme aus der Netzspannung 2 wäre für jedes einzelne Schweißgerät 4 durch die Kombination des Gleichspannungswandlers 14, der während des Schweißvorgangs eine reduzierte Gleichspannung bereitstellt, und die Kon - densatoren 34 gegenüber der Netzspannung 2 gepuffert. Damit können dank der erfindungsgemäßen Versorgungsschaltung 10 mehrere Schweißgeräte 4 mit der selben Netzspannung 2 verbunden werden und trotzdem in gewissem Maße unabhängig voneinander Schweißvorgänge ausführen.

## Patentansprüche

1. Versorgungsschaltung (10) zur Versorgung eines Schweißgerätes (4) mit elektrischer Energie, wobei die Versorgungsschaltung (10) einen an eine Netzspannung (2) anschließbaren Netzspannungsgleichrichter (12) und ein eine Gleichspannung in eine über eine Phase hinweg nicht konstante Spannung, insbesondere in eine Rechteckspannung mit Polaritätswechsel und/oder ohne Polaritätswechsel umwandelnden Leistungsteil (18) umfasst, der zur Abgabe der nicht konstanten Spannung an einen Transformator eines Schweißgerätes (4) anschliessbar ist, wobei zwischen einem Gleichspannungsausgang des Netzspannungsgleichrichters (12) und einem Gleichspannungseingang des Leistungsteils (18) ein Gleichspannungswandler (14) geschaltet ist, der eine vom Netzspannungsgleichrichter (12) abgegebene Spannung in eine höhere Spannung wandelt, und zwischen dem Gleichspannungswandler (14) und dem Leistungsteil (18) ein Zwischenkreis (16) mit mindestens einem Kondensator (34), der zwischen den beiden Spannungsniveaus des Zwischenkreises (16) angeordnet ist, geschaltet ist, **dadurch gekennzeichnet, dass** der Gleichspannungswandler (14) darauf ausgelegt ist, bei Leistungsentnahme eines Schweißgerätes (4) aus dem Leistungsteil (18) die für den Zwischenkreis (16) bereitgestellte Spannung unter eine aktuelle Spannung vor dem Schweißvorgang des mindestens einen Kondensators (34) mit der Zeit gleichmäßig zu verringern, so dass elektrische Ladung aus dem Kondensator (34) abfließt.

2. Versorgungsschaltung (10) nach Anspruch 1, **dadurch gekennzeichnet, dass** der Gleichspannungswandler (14) ein Hochsetzwandler ist.

3. Versorgungsschaltung (10) nach einem der vorherigen Ansprüche, **dadurch gekennzeichnet, dass** der Gleichspannungswandler (14) darauf ausgelegt ist, mit einer Taktfrequenz größer als die Taktfrequenz eines an einen Spannungsausgang des Leistungsteil (18) angeschlossenen Transformators eines Schweißgerätes (4) betrieben zu werden.

4. Versorgungsschaltung (10) nach einem der vorherigen Ansprüche, **dadurch gekennzeichnet, dass** der Netzspannungsgleichrichter (12) einen Drehstrombrückengleichrichter (12) und/oder eine B6-Schaltung umfasst.

5. Versorgungsschaltung (10) nach einem der vorherigen Ansprüche, **dadurch gekennzeichnet, dass** das Leistungsteil (18) eine H-Brücke (18) ist.

6. Versorgungsschaltung (10) nach einem der vorherigen Ansprüche, **dadurch gekennzeichnet, dass** der Gleichspannungswandler (14) mindestens eine Induktivität (24), mindestens einen Kondensator (22), mindestens eine Diode (26) und mindestens einen Hochfrequenzschalter (28) umfasst, der bevorzugt mindestens einen mit einer Taktung ansteuerbaren Transistor (30) umfasst.

7. Versorgungsschaltung (10) nach einem der vorherigen Ansprüche, **dadurch gekennzeichnet, dass** der Zwischenkreis zwei in Reihe geschaltete Kondensatoren (34) umfasst.

8. Schweißgerät (4) umfassend eine Versorgungsschaltung (10) nach einem der vorherigen Ansprüche.

## Claims

1. Supply circuit (10) for supplying a welding device (4) with electrical energy, the supply circuit (10) comprising a mains voltage rectifier (12) that can be connected to a mains voltage (2) and a power unit (18) that converts a DC voltage into voltage that is not constant across a phase, in particular into a square wave voltage with polarity reversal and/or without polarity reversal, which power unit can be connected to a transformer of a welding device (4) in order to deliver the voltage that is not constant, a DC voltage converter (14) being connected between a DC voltage output of the mains voltage rectifier (12) and a DC voltage input of the power unit (18), which DC voltage converter converts a voltage delivered by the mains voltage rectifier (12) into a higher voltage, and an intermediate circuit (16) comprising at least one capacitor (34), which is arranged between the two voltage levels of the intermediate circuit (16), being connected between the DC voltage converter (14) and the power unit (18), **characterised in that** the DC voltage converter (14) is designed, during power take-up of a welding device (4) from the power unit (18), to steadily reduce, over time, the voltage provided for the intermediate circuit (16) to below a current voltage, before the welding process, of the at least one capacitor (34), such that electrical charge flows out of the capacitor (34).

2. Supply circuit (10) according to claim 1, **characterised in that** the DC voltage converter (14) is a boost converter.

3. Supply circuit (10) according to any of the preceding claims, **characterised in that** the DC voltage converter (14) is designed to be operated with a clock frequency larger than the clock frequency of a transformer of a welding device (4) connected to a voltage output of the power unit (18).

4. Supply circuit (10) according to any of the preceding claims, **characterised in that** the mains voltage rectifier (12) comprises a three-phase bridge rectifier (12) and/or a B6 circuit.

5. Supply circuit (10) according to any of the preceding claims, **characterised in that** the power unit (18) is an H-bridge (18).

6. Supply circuit (10) according to any of the preceding claims, **characterised in that** the DC voltage converter (14) comprises at least one inductor (24), at least one capacitor (22), at least one diode (26) and at least one high-frequency switch (28), which preferably comprises at least one transistor (30) that can be controlled at a clock speed.

7. Supply circuit (10) according to any of the preceding claims, **characterised in that** the intermediate circuit comprises two capacitors (34) that are connected in series.

8. Welding device (4) comprising a supply circuit (10) according to any of the preceding claims.

## Revendications

1. Circuit d'alimentation (10) destiné à l'alimentation d'un appareil de soudage (4) en énergie électrique, dans lequel le circuit d'alimentation (10) comporte un redresseur de tension de réseau (12) raccordable à une tension de réseau (2) et une partie de puissance (18), convertissant une tension continue en une tension non constante au-delà d'une phase, en particulier en une tension rectangulaire avec changement de polarité et/ou sans changement de polarité, qui, pour la fourniture de la tension non constante, peut être raccordée à un transformateur d'un appareil de soudage (4), dans lequel entre une sortie de tension continue du redresseur de tension de réseau (12) et une entrée de tension continue de la partie de puissance (18) est câblé un convertisseur de tension continue (14) qui convertit une tension fournie par le redresseur de tension de réseau (12) en une tension plus élevée, et entre le convertisseur de tension continue (14) et la partie de puissance (18) est câblé un circuit intermédiaire (16) avec au moins un condensateur (34), qui est disposé entre les deux niveaux de tension du circuit intermédiaire (16), **caractérisé en ce que** le convertisseur de tension continue (14) est conçu pour, en cas de prélèvement de puissance de la partie de puissance (18) par un appareil de soudage (4), diminuer régulièrement dans le temps la tension préparée pour le circuit intermédiaire (16) en dessous d'une tension actuelle, avant la procédure de soudage, de l'au moins un condensateur (34) de sorte que la charge électrique s'écoule du condensateur (34).

2. Circuit d'alimentation (10) selon la revendication 1, **caractérisé en ce que** le convertisseur de tension continue (14) est un convertisseur élévateur.

3. Circuit d'alimentation (10) selon l'une quelconque des revendications précédentes, **caractérisé en ce que** le convertisseur de tension continue (14) est conçu pour être exploité avec une fréquence de cadencement plus grande que la fréquence de cadencement d'un transformateur, raccordé à une sortie de tension de la partie de puissance (18), d'un appareil de soudage (4).

4. Circuit d'alimentation (10) selon l'une quelconque des revendications précédentes, **caractérisé en ce que** le redresseur de tension de réseau (12) comporte un redresseur en pont de courant alternatif (12) et/ou un circuit B6.

5. Circuit d'alimentation (10) selon l'une quelconque des revendications précédentes, **caractérisé en ce que** la partie de puissance (18) est un pont en H (18).

6. Circuit d'alimentation (10) selon l'une quelconque des revendications précédentes, **caractérisé en ce que** le convertisseur de tension continue (14) comporte au moins une inductivité (24), au moins un condensateur (22), au moins une diode (26) et au moins un commutateur haute fréquence (28) qui comporte de préférence au moins un transistor (30) commandable par une cadence d'horloge.

7. Circuit d'alimentation (10) selon l'une quelconque des revendications précédentes, **caractérisé en ce que** le circuit intermédiaire comporte deux condensateurs (34) câblés en série.

8. Appareil de soudage (4) comportant un circuit d'alimentation (10) selon l'une quelconque des revendications précédentes.
